# EUROPEAN PATENT SPECIFICATION

(11) **EP 4 607 084 B1**
(45) Date of publication and mention of the grant of the patent: **18.11.2026**
(21) Application number: 23879793.0
(22) Date of filing: 17.10.2023
(51) Int. Cl.: F21S 41/20, F21S 41/255, F21S 41/143, F21S 41/153, G02B 19/00, G02B 1/00

(54) **VEHICLE HEADLIGHT**
SCHEINWERFER FÜR FAHRZEUGE
PHARE DE VÉHICULE

(30) Priority: 20.10.2022 JP 2022168609
(43) Date of publication of application: 27.08.2025
(73) Proprietor: Koito Manufacturing Co., Ltd., Shinagawa-ku, Tokyo 141-0001 (JP)
(72) Inventor: MOTOHASHI Kazuya, Shizuoka-shi, Shizuoka 424-8764 (JP)
(74) Representative: Hoffmann Eitle
(86) International application number: PCT/JP2023/037568
(87) International publication number: WO 2024/085150

(56) References cited:
- WO-A1-2017/176921
- WO-A1-2022/025031
- WO-A1-2022/168012
- CN-U- 216 896 898
- JP-A- 2012 256 442
- JP-A- 2018 537 804
- JP-A- 2019 086 765

## Description

### Technical Field

The present invention relates to a vehicle headlight.

### Background Art

As a vehicle headlight such as an automobile headlight, a headlight in which light emitted from a light source passes through a primary lens and in incident on a projection lens is known. Patent Literature 1 below discloses such a vehicle headlight.

A convex lens is used as the primary lens of the vehicle headlight of Patent Literature 1 below. Therefore, the light emitted from the light source obtains a small divergence angle at the primary lens and is incident on the projection lens.

[Patent Literature 1] JP 2018-67523 A.

Other vehicle headlights are known from WO 2022/168012 A1 or CN 216 896 898 U.

### Summary of Invention

As in the vehicle headlight of Patent Literature 1, the primary lens that reduces the divergence angle of light from the light source is arranged between the light source and the projection lens, so that the light emitted from the light source can be made efficiently incident on the projection lens. However, in the case where the primary lens is composed of a convex lens, when the light source is viewed from the projection lens through the primary lens, an image of the light source appears larger than an actual size of the light source at a position farther than an actual position of the light source. For this reason, a light distribution pattern of the light emitted from the projection lens becomes large, and in the light distribution pattern, a resolution of the light decreases and brightness decreases. To prevent this phenomenon, it is necessary to enlarge the projection lens to move the projection lens away from the primary lens. However, there is a demand for suppressing an increase in size of the vehicle headlight.

Therefore, an object of the present invention is to provide a vehicle headlight capable of suppressing an increase in size and efficiently emitting light.

To achieve the above-described object, a vehicle headlight according to the present invention includes: a light source; a meta-lens including a meta-region in which a plurality of nanostructures each having a width smaller than a largest wavelength of light emitted from the light source is arranged and through which the light emitted from the light source is transmitted; and a projection lens through which the light emitted from the meta-lens is transmitted, in which the meta-lens reduces a divergence angle of the light incident on the meta-region from the light source and emits the light, and in a case where the light source is viewed from a side of the projection lens via the meta-region, an image of the light source appears at a position farther than a position of the light source, and also appears smaller than an image of the light source seen in a case where a convex lens is arranged instead of the meta-lens so as to emit the light from the light source at the same divergence angle as the light emitted from the meta-lens, and the light source is viewed from the side of the projection lens side via the convex lens.

In this vehicle headlight, the divergence angle of the light from the light source is reduced by the meta-lens used as a primary lens. Therefore, according to the vehicle headlight, it is possible to cause the light to be efficiently incident on the projection lens, and to efficiently emit the light. Further, in the vehicle headlight, as described above, in the case where the light source is viewed from the projection lens side through the meta-region, the image of the light source appears at the position farther than the position of the light source, and the image of the light source also appears smaller than the image of the light source seen in a case where the convex lens is arranged instead of the meta-lens so as to emit the light from the light source at the same divergence angle as the light emitted from the meta-lens, and the light source is viewed from the projection lens side through the convex lens. Therefore, as compared with a case where the convex lens is used as the primary lens, even if the size of the projection lens is small and the position of the projection lens is close to the light source, it is possible to suppress an increase in a light distribution pattern of the light emitted from the projection lens, and to suppress a decrease in resolution and a decrease in brightness of the light.

Further, in the case where the light source is viewed from the side of the projection lens via the meta-region, the image of the light source may appear equal in size to the light source at the position farther than the position of the light source.

Further, in the above-described vehicle headlight, an amount of change in a structure of the nanostructure favorably increases from a center side toward an outer peripheral side of the meta-region.

With such a configuration, it is possible to easily design the meta-region in which the image of the light source in the case where the light source is viewed from the projection lens side through the meta-region appears as described above while reducing the divergence angle of the light as described above.

Further, in the above-described vehicle headlight, an external casing that surrounds the light source, the meta-lens, and the projection lens and an internal casing that surrounds the light source are included, and the meta-lens may be a part of the internal casing.

In this case, the external casing protects the light source, the meta-lens, and the projection lens inside, and the internal casing protects the light source from dust and the like. Further, since the meta-lens is a part of the internal casing, it is possible to reduce the size of the internal casing as compared with the case where the meta-lens is located inside the internal casing, and this can contribute to reduction in size of the vehicle headlight.

Further, in this case, the nanostructure is favorably formed on an internal space side of the internal casing.

As the nanostructure is formed on the internal space side of the internal casing, it is possible to suppress adhesion of dust to the nanostructure.

Therefore, according to the present invention, there is provided a vehicle headlight capable of suppressing an increase in size and efficiently emitting light.

### Brief Description of Drawings

[FIG. 1] FIG. 1 is a cross-sectional view schematically illustrating a vehicle headlight according to an embodiment of the present invention.
[FIG. 2] FIG. 2 is a front view schematically illustrating a light source illustrated in FIG. 1.
[FIG. 3] FIG. 3 is an enlarged front view illustrating a part of one principal plane of a meta-lens illustrated in FIG. 1.
[FIG. 4] FIG. 4 is a cross-sectional view schematically illustrating the meta-lens illustrated in FIG. 1.
[FIG. 5] FIG. 5 is a view for describing a condition that an image of a light source appears to have the same size as that of the light source.
[FIG. 6] FIG. 6 is a view illustrating a modification of the vehicle headlight in the embodiment of the present invention.

### Description of Embodiments

Hereinafter, a preferred embodiment of a vehicle headlight according to the present invention will be described in detail with reference to the drawings. The embodiment exemplified below is intended to facilitate understanding of the present invention and is not intended to limit the present invention. Note that, in the drawings referred to below, dimensions of each member may be changed for easy understanding.

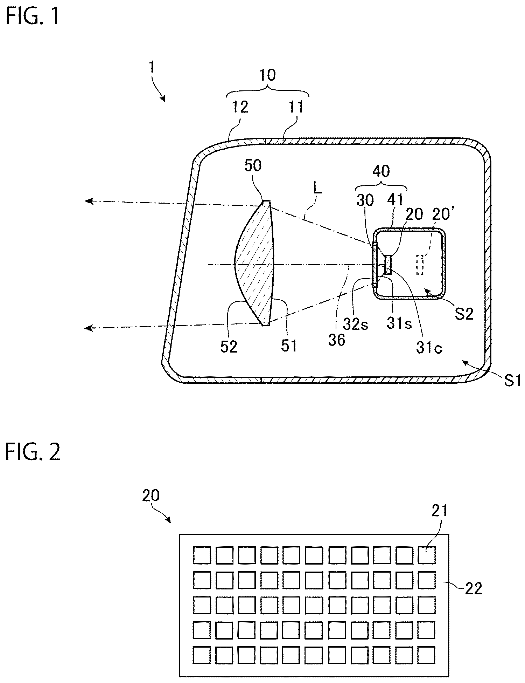

FIG. 1 is a view illustrating a vehicle headlight in an embodiment of the present invention, and is a view schematically illustrating a cross section of the vehicle headlight in a vertical direction. As illustrated in FIG. 1, a vehicle headlight 1 of the present embodiment includes, as main components, an external casing 10, a light source 20, an internal casing 40 including a meta-lens 30, and a projection lens 50.

The external casing 10 mainly includes an external housing 11 and a front cover 12. Front of the external housing 11 is opened, and the front cover 12 is fixed to the external housing 11 so as to close the opening. A space S1 is formed by the external housing 11 and the front cover 12. The light source 20, the internal casing 40, and the projection lens 50 are accommodated in the space S1, and the projection lens 50, the meta-lens 30, and the light source 20 are arranged side by side along a front-rear direction.

FIG. 2 is a front view schematically illustrating the light source 20 illustrated in FIG. 1. In the present embodiment, the light source 20 includes a plurality of light emitting elements 21 that emits light L and a circuit board 22 on which the plurality of light emitting elements 21 is mounted. Note that, in FIG. 2, only one light emitting element 21 is denoted by a reference sign, and reference signs of the other light emitting elements 21 are omitted for the sake of visibility. The plurality of light emitting elements 21 is arranged in a matrix, has emission surfaces of the light L positioned on substantially the same plane, and emits the light L forward. The light emitted from each light emitting point of each light emitting element 21 is a spherical wave and has a predetermined divergence angle. Therefore, the light L emitted from each light emitting element 21 propagates forward while spreading at the predetermined divergence angle. The plurality of light emitting elements 21 can individually change a light amount of the emitted light L. In the present embodiment, the light emitting element 21 is a light emitting diode (LED) that emits white light, and the light source 20 is a so-called LED array. Note that the number and configuration of the light emitting elements 21 are not particularly limited. For example, the light emitting element 21 may include a plurality of LEDs that emits light having different wavelengths from one another, or may include a plurality of laser diodes (LDs) that emits light having different wavelengths from one another and phosphors provided on the LDs. Furthermore, the light source 20 may include one light emitting element.

The light source 20 including the plurality of light emitting elements 21 can emit the light L having a predetermined light distribution pattern when the light emitting element 21 that emits the light L is selected, and can change the light distribution pattern by changing the selection. In addition, the light source 20 can adjust an intensity distribution of the light L in the light distribution pattern by adjusting the light amount emitted from each light emitting element 21. Note that, even in the case where the light source 20 includes the plurality of light emitting elements 21, the light source 20 may not be able to change the light distribution pattern of the emitted light L.

The internal casing 40 includes internal housing 41 and the meta-lens 30 as main components. A front side of the internal housing 41 is opened, and the meta-lens 30 is fixed to the internal housing 41 so as to close the opening. An internal space S2 is formed by the internal housing 41 and the meta-lens 30, and the light source 20 is accommodated in the internal space S2. Note that, in the present embodiment, the internal space S2 is sealed by the internal housing 41 and the meta-lens 30.

In the present embodiment, the meta-lens 30 fixed to the internal housing 41 is a substantially plate-like member, and is configured to adjust the divergence angle of the transmitted light L. The meta-lens 30 is arranged in front of the light source 20, and the light L emitted from the light source 20 is incident on an incident surface 31s facing an inside of the internal casing 40, and is emitted from an emission surface 32s facing an outside of the internal casing 40.

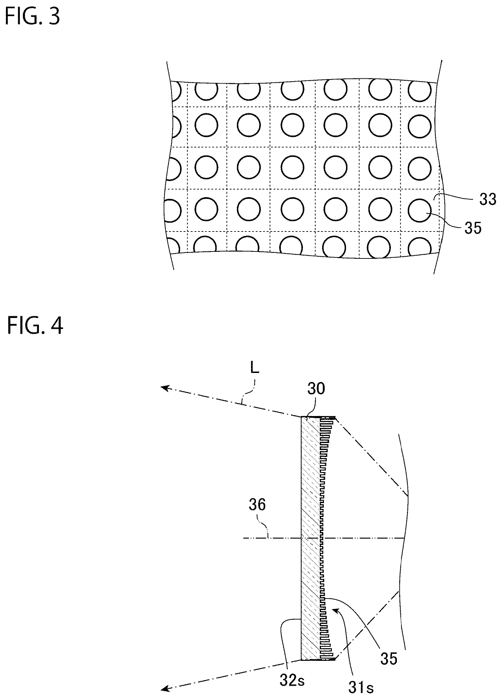

FIG. 3 is an enlarged front view illustrating a part of the incident surface 31s of the meta-lens 30 in FIG. 1. As illustrated in FIG. 3, the incident surface 31s has a plurality of cells 33 divided in a matrix, and a nanostructure 35 extending perpendicularly to an in-plane direction of the incident surface 31s is provided in each of the cells 33. Therefore, in the present embodiment, the nanostructure 35 is formed on a side of the internal space S2 of the internal casing 40. Note that FIG. 3 illustrates a boundary between the adjacent cells 33 with a broken line. In addition, only one cell 33 and one nanostructure 35 are denoted by reference numerals, and reference numerals of the other cells 33 and nanostructures 35 are omitted for the sake of visibility. In the meta-lens 30 of the present embodiment, the plurality of cells 33 is arranged over the entire incident surface 31s, and the entire incident surface 31s is a meta-region in which the plurality of cells 33 including the nanostructures 35 is arranged. In addition, an axis 36 orthogonal to the incident surface 31s at a center 31c of the incident surface 31s intersects a center of the light source 20 and is perpendicular to a light emission surface of each light emitting element 21. In addition, the plurality of light emitting elements 21 of the light source 20 is arranged rotationally symmetrically about the axis 36.

Note that arrangement of the plurality of cells 33 and a position and a range of the meta-region are not particularly limited. In addition, a shape of the cell 33 illustrated in FIG. 3 is substantially quadrangular, but is not particularly limited. In addition, sizes and shapes of the plurality of cells 33 may be different from one another. In addition, the sizes of the meta-lens 30 and the meta-region are not particularly limited, and an outer shape of the meta-lens 30 is also not particularly limited. Further, unlike the above description, at least a part of the meta-region may be provided on the emission surface 32s. In addition, in FIG. 3, the cells 33 are arranged in a matrix, but the cells 33 may be radially arranged.

In the present embodiment, the shape of the nanostructure 35 is a cylindrical shape, and a diameter is smaller than a longest wavelength of the light L emitted from the light source 20. Note that a width of the nanostructure 35 is only required to be smaller than the longest wavelength of the light L emitted from the light source 20, and the shape of the nanostructure 35 is not particularly limited. For example, the shape of the nanostructure 35 may be a prismatic shape or a spindle shape. Further, the nanostructure 35 may include a pair of quadrangular prisms or the like arranged at a predetermined interval. Further, the shapes of the nanostructures 35 in the respective cells 33 may be different. Examples of a material constituting the meta-lens 30 include glass, resin, and the like. Note that materials constituting the nanostructure 35 and a portion other than the nanostructure 35 may be the same or different.

FIG. 4 is a cross-sectional view schematically illustrating the meta-lens 30 according to the present embodiment. As illustrated in FIG. 4, in the meta-lens 30 of the present embodiment, an amount of change in the structure of the nanostructure 35 increases from a center side toward an outer peripheral side of the meta-region. FIG. 4 illustrates an example in which the amount of change in height of the nanostructure 35 increases from the center side toward the outer peripheral side of the meta-region. Further, other examples that the amount of change in the structure of the nanostructure 35 increases from the center side toward the outer peripheral side of the meta-region include an example in which the amount of change in thickness of the nanostructure 35 increases from the center side toward the outer peripheral side of the meta-region, and an example in which the amount of change in the shape of the nanostructure 35 increases from the center side toward the outer peripheral side of the meta-region.

The cell 33 including such a nanostructure 35 can modulate a phase of the light L transmitted through the cell 33. Then, by adjusting the arrangement of the plurality of cells 33, or the size, shape, or the like of the nanostructure 35 in each cell 33, it is possible to reduce the divergence angle of the light L transmitted through the meta-lens 30. Furthermore, in the present embodiment, in a case where the light source 20 is viewed from the side of the projection lens 50 through the meta-region of the meta-lens 30, an image 20' of the light source 20 appears equal in size to the actual size of the light source 20 at a position farther than the actual position of the light source 20, as illustrated with the broken line in FIG. 1. The divergence angle is reduced as described above, and the arrangement of the plurality of cells 33 or the size, shape, or the like of the nanostructure 35 in each cell 33 is adjusted so that the image 20' can be seen as described above. That is, in the present embodiment, the nanostructure 35 in the meta-region is configured such that there is substantially no change in a radial direction of a center coordinate of the spherical wave of each light incident from each light emitting point in each light emitting element 21 of the light source 20, and the spherical wave has a phase modulation amount that is away from an optical axis direction of the light L from the light source 20. The radial coordinate in this case is a direction along the in-plane direction of the emission surface of each light emitting element 21, and is a direction perpendicular to the direction of the optical axis of the light L from the light source 20.

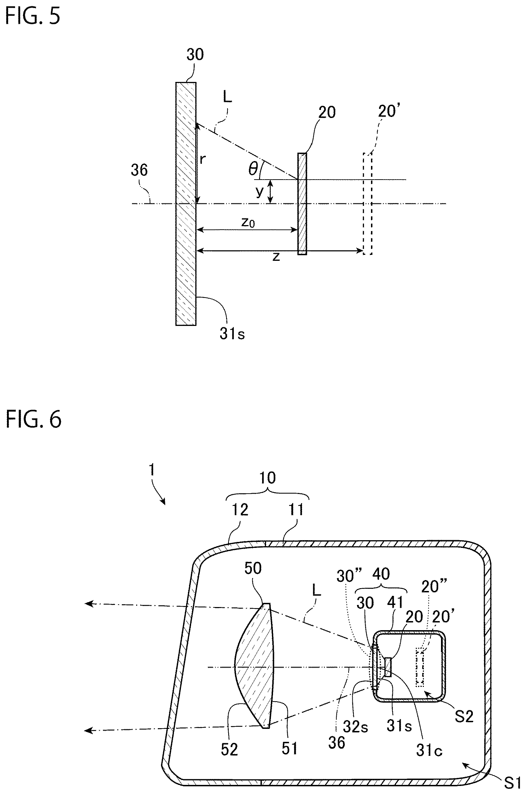

FIG. 5 is a view for describing a condition that the image 20' of the light source 20 appears to have the same size as that of the light source 20. As illustrated in FIG. 5, a distance between the light source 20 and the meta-lens 30 along the axis 36 is defined as z₀, and a distance between the incident surface 31s of the meta-lens 30 and the image 20' is defined as z. The axis 36 coincides with the optical axis of the light emitted from the light source 20. In a case where light emitted from a position at a distance y from the optical axis in the light source 20 is incident on the meta-lens 30 from a position at a distance r from the optical axis on the incident surface 31s of the meta-lens 30, a phase distribution Φ_{source} of the light is expressed by the following equation (1). ${Φ}_{source} = \sqrt{{{z}_{0}}^{2} + {\left(r-y\right)}^{2}} - \sqrt{{{z}_{0}}^{2} + {y}^{2}}$ (1)

An amount of the above equation is equal to a phase delay amount when the spherical wave centered on the position at the distance y from the optical axis in the light source 20 reaches a flat plate separated by a distance z₀. That light transmitted through the meta-lens 30 appearing to be emitted from the image 20' can be considered that the phase distribution of the light transmitted through the meta-lens 30 is the phase distribution of the spherical wave emitted from the position at the distance y from the optical axis in the image 20'. Furthermore, before and after the spherical wave is changed by the meta-lens 30, a center position of the light source 20 and a center position of the image 20' are supposed to be equal to each other, and the position at the distance y from the optical axis in the light source 20 and the position at the distance y from the optical axis in the image 20' are supposed to be the same as each other. Therefore, a phase distribution Φₒᵤₜ emitted from the meta-lens 30 is expressed by following equation (2). ${Φ}_{out} = \sqrt{{z}^{2} + {\left(r-y\right)}^{2}} - \sqrt{{z}^{2} + {y}^{2}}$ (2)

A phase modulation amount Φₗₑₙₛ in the meta-lens 30 can be expressed by a difference in phase distribution between the light incident on the meta-lens 30 and the light emitted, that is, Φₗₑₙₛ = Φₒᵤₜ - Φ_{source}. Further, when an entrance angle of when the light emitted from the position at the distance y from the optical axis in the light source 20 is incident on the position at the distance r from the optical axis in the meta-lens 30 is θ, the distance y is expressed by y = r - z₀ × tan θ.

Therefore, the phase modulation amount Φₗₑₙₛ is expressed by the following equation (3). $\begin{matrix}{Φ}_{lens} = \left(\sqrt{{{z}_{0}}^{2} {tan}^{2} θ + {z}^{2}}-\sqrt{{\left(r-{z}_{0}tan θ\right)}^{2} + {z}^{2}}\right) \\ - \left(\sqrt{{{z}_{0}}^{2} {tan}^{2} θ + {{z}_{0}}^{2}}-\sqrt{{\left(r-{z}_{0}tan θ\right)}^{2} + {{z}_{0}}^{2}}\right)\end{matrix}$ (3)

Therefore, the nanostructures 35 are arranged so as to realize this phase distribution. As described above, the amount of change in the structure of the nanostructure 35 increases from the center side toward the outer peripheral side of the meta-region, whereby the meta-lens 30 having such characteristics can be easily designed.

The projection lens 50 is a lens having an incident surface 51 on which the light L emitted from the meta-lens 30 is incident and an emission surface 52 from which the light L incident from the incident surface 51 is emitted. The projection lens 50 reduces the divergence angle of the light L incident from the meta-lens 30 and emits the light L.

In the vehicle headlight 1 having the above configuration, when the light L is emitted from the selected light emitting element 21 of the light source 20, the light L is emitted at the predetermined divergence angle. The light L is incident on the meta-region of the incident surface 31s of the meta-lens 30, and is emitted from the emission surface 32s. At this time, the divergence angle of the light L is made smaller than the divergence angle of the light L emitted from the light source 20. The light L having the reduced divergence angle is transmitted through the projection lens 50, further reduced in divergence angle, and emitted from the front cover 12. In such an operation, by appropriately selecting the light emitting element 21 of the light source 20, it is possible to switch between a high beam and a low beam or to emit the light L serving as an adaptive driving beam (ADB).

As described above, in the vehicle headlight 1 of the present embodiment, the meta-lens 30 reduces the divergence angle of the light L to be incident on the meta-region of the meta-lens 30 from the light source 20 and emits the light L. Furthermore, in the case where the light source 20 is viewed from the side of the projection lens 50 through the meta-region, the image 20' of the light source 20 appears equal in size to the light source 20 at the position farther than the position of the light source 20. As described above, in the vehicle headlight 1 of the present embodiment, since the divergence angle of the light L from the light source 20 is reduced by the meta-lens 30 used as the primary lens, it is possible to cause the light L to be efficiently incident on the projection lens 50, and to efficiently emit the light L. Furthermore, in the vehicle headlight 1 of the present embodiment, in the case where the light source 20 is viewed from the side of the projection lens 50 through the meta-region, the image 20' of the light source 20 appears equal in size to the light source 20 at the position farther than the position of the light source 20, as described above. Therefore, as compared with a case where a convex lens is used as the primary lens, even if the size of the projection lens 50 is small and the position of the projection lens 50 is close to the light source 20, it is possible to suppress an increase in the light distribution pattern of the light L emitted from the projection lens 50, and to suppress a decrease in the resolution and a decrease in the brightness of the light L.

Note that the present embodiment has been described using the case where the image 20' of the light source 20 appears equal in size to the light source 20 at the position farther than the position of the light source 20 in the case where the light source 20 is viewed from the side of the projection lens 50 through the meta-region. However, the present invention is not limited thereto.

FIG. 6 is a view illustrating a modification of the vehicle headlight 1 in the above-described embodiment. FIG. 6 illustrates a virtual state in which a convex lens 30" is arranged instead of the meta-lens 30 with the dotted line. The convex lens 30" emits the light L incident from the light source 20 at the same divergence angle as the divergence angle of the light L emitted from the meta-lens 30. In this case, in a case where the light source 20 is viewed from the side of the projection lens 50 through the convex lens 30", an image 20" of the light source 20 appears larger than the actual size of the light source 20 at a position farther than the actual position of the light source 20, as illustrated with the dotted line in FIG. 6. The vehicle headlight 1 of the present modification is different from the above-described embodiment in that, in the case where the light source 20 is viewed from the side of the projection lens 50 through the meta-region of the meta-lens 30, the image 20' of the light source 20 appears larger than the actual size of the light source 20 and smaller than the image 20" at the position farther than the actual position of the light source 20, as illustrated with the broken line in FIG. 6. That is, in the present modification, the nanostructure 35 in the meta-region is configured such that the change in the radial direction of the center coordinate of the spherical wave of each light incident from each light emitting point in each light emitting element 21 of the light source 20 is suppressed as compared with the change in the radial direction of the center coordinate of the spherical wave of each light in the case where the convex lens 30" is arranged instead of the meta-lens 30, and the spherical wave has the phase modulation amount away from the optical axis direction of the light L from the light source 20. Furthermore, although not particularly illustrated, in a modification different from the present modification, in the case where the light source 20 is viewed from the side of the projection lens 50 via the meta-region, the image 20' of the light source 20 may appear smaller than the size of the light source 20 at the position farther than the position of the light source 20.

As described above, in the case where the size of the image 20' of the light source 20 appears to be different from the size of the light source 20, the following can be considered.

It is assumed that A ratio between the size of the light source 20 and the size of the image 20' is β. For example, if the size of the image 20' is twice the size of the light source 20, β is 2. In this case, if the position at the distance y from the optical axis in the light source 20 is a position y' in the image 20', y' = βy is obtained. Therefore, in this case, the equation (2) can be rewritten as the equation (4) below. $\begin{matrix}{Φ}_{out} = \sqrt{{z}^{2} + {\left(r-y′\right)}^{2}} - \sqrt{{z}^{2} + y {′}^{2}} \\ = \sqrt{{z}^{2} + {\left(r-βy\right)}^{2}} - \sqrt{{z}^{2} + {\left(βy\right)}^{2}}\end{matrix}$ (4)

Therefore, in this case, the equation (3) can be rewritten as the equation (5) below. $\begin{matrix}{Φ}_{lens} = \left(\sqrt{{\left\{{βz}_{0}tan θ+\left(1-β\right)r\right\}}^{2} + {z}^{2}}-\sqrt{{\left\{β\left(r-{z}_{0}tan θ\right)\right\}}^{2} + {z}^{2}}\right) \\ - \left(\sqrt{{{z}_{0}}^{2} {tan}^{2} θ + {{z}_{0}}^{2}}-\sqrt{{\left(r-{z}_{0}tan θ\right)}^{2} + {{z}_{0}}^{2}}\right)\end{matrix}$ (5)

In a case where the convex lens 30" is arranged instead of the meta-lens 30 as illustrated in FIG. 6, a magnification is z/z₀. Therefore, a range of β is 0 ≤ β <z/z₀. Note that, in the case of β = 1, the size of the image 20' and the size of the light source 20 are the same as in the above-described embodiment, and in the case of β = 0, the image 20' is a point. Therefore, the nanostructures 35 are arranged so as to be able to realize the phase distribution satisfying the equation (5) in the range of β.

That is, in the vehicle headlight of the present invention, the meta-lens 30 reduces the divergence angle of the light L incident on the meta-region from the light source 20 and emits the light L, and in the case where the light source 20 is viewed from the projection lens 50 side through the meta-region, the image 20' of the light source 20 appears at the position farther than the position of the light source 20, and also appears smaller than the image 20" of the light source 20 seen in the case where the convex lens 30" is arranged instead of the meta-lens 30 so as to emit the light L from the light source 20 at the same divergence angle as the light L emitted from the meta-lens 30, and the light source is viewed from the projection lens 50 side through the convex lens 30". The meta-lens 30 is thus configured. With such a configuration, as compared with the case where a convex lens is used as the primary lens, even if the size of the projection lens 50 is small and the position of the projection lens 50 is close to the light source 20, it is possible to suppress an increase in the light distribution pattern of the light L emitted from the projection lens 50, and to suppress a decrease in the resolution and a decrease in the brightness of the light L.

Further, in the vehicle headlight 1 of the above-described embodiment, the amount of change in size of the nanostructure 35 increases from the center side toward the outer peripheral side of the meta-region. Therefore, it is possible to easily design the meta-region such that the image 20' of the light source 20 in the case where the light source 20 is viewed from the projection lens 50 side through the meta-region appears smaller than the image 20" at the position farther than the position of the light source 20 while emitting the light L with the reduced divergence angle as described above.

Further, the vehicle headlight 1 according to the above-described embodiment includes the external casing 10 that surrounds the light source 20, the meta-lens 30, and the projection lens 50, and the internal casing 40 that surrounds the light source 20, and the meta-lens 30 is a part of the internal casing 40. In this case, the external casing 10 protects the light source 20, the meta-lens 30, and the projection lens 50 inside, and the internal casing 40 protects the light source 20 from dust and the like. Further, since the meta-lens 30 is a part of the internal casing 40, it is possible to reduce the size of the internal casing 40 as compared with the case where the meta-lens 30 is located inside the internal casing 40, and this can contribute to reduction in size of the vehicle headlight 1. Further, in the vehicle headlight 1 of the above-described embodiment, since the nanostructure 35 is formed on the internal space S2 side of the internal casing 40, it is possible to suppress adhesion of dust to the nanostructure 35. Such a configuration is also applicable to the above-described modifications.

Although the present invention has been described by taking the above-described embodiment as an example, the present invention is not limited thereto.

For example, in the above-described embodiment, the vehicle headlight 1 is a headlight, but is not particularly limited. In the above-described embodiment, the example in which the amount of change in the structure of the nanostructure 35 increases from the center side toward the outer peripheral side of the meta-region has been described. However, the nanostructure 35 may have another design as long as the image 20' of the light source 20 appears as described above.

Further, the internal housing 41 of the internal casing 40 is not essential.

Further, in the above-described embodiment, the meta-lens 30 having a substantially flat plate shape has been described by way of example. However, the shape of the meta-lens 30 is not limited to a plate shape, and the incident surface 31s and the emission surface 32s may have curved surfaces.

According to the present invention, a vehicle headlight capable of suppressing an increase in size and efficiently emitting the light L is provided, and can be used in the field of vehicle headlights of automobiles.

## Claims

1. A vehicle headlight (1) comprising:
a light source (20);
a meta-lens (30) including a meta-region in which a plurality of nanostructures (35) each having a width smaller than a largest wavelength of light emitted from the light source (20) is arranged and through which the light emitted from the light source (20) is transmitted; and
a projection lens (50) through which the light emitted from the meta-lens (30) is transmitted, **characterized in that**
the meta-lens (30) reduces a divergence angle of the light incident on the meta-region from the light source (20) and emits the light, and
in a case where the light source (20) is viewed from a side of the projection lens (50) via the meta-region, an image (20') of the light source (20) appears at a position farther than a position of the light source (20), and also appears smaller than the image (20") of the light source (20) seen in a case where a convex lens (30") is arranged instead of the meta-lens (30) so as to emit the light from the light source (20) at a same divergence angle as the light emitted from the meta-lens (30), and the light source (20) is viewed from the side of the projection lens (50) side via the convex lens (30").

2. The vehicle headlight according to claim 1, wherein, in the case where the light source (20) is viewed from the side of the projection lens (50) via the meta-region, the image (20') of the light source (20) appears equal in size to the light source (20) at the position farther than the position of the light source (20).

3. The vehicle headlight according to claim 1 or 2, wherein
an amount of change in a structure of the nanostructure (35) increases from a center side toward an outer peripheral side of the meta-region.

4. The vehicle headlight according to claim 1 or 2, comprising:
an external casing (10) that surrounds the light source (20), the meta-lens (30), dd and the projection lens (50); and
an internal casing (40) that surrounds the light source (20),
wherein
the meta-lens (30) is a part of the internal casing (40).

5. The vehicle headlight according to claim 4, wherein
the nanostructure (35) is formed on an internal space (S2) side of the internal casing (40).

## Patentansprüche

1. Scheinwerfer für Fahrzeuge, umfassend:
eine Lichtquelle (20);
eine Metalinse (30), einschließlich eines Metabereichs, in dem eine Vielzahl von Nanostrukturen (35) angeordnet ist, deren Breite jeweils kleiner ist als die größte Wellenlänge des von der Lichtquelle (20) emittierten Lichts und durch die das von der Lichtquelle (20) emittierte Licht übertragen wird; und
eine Projektionslinse (50), durch die das von der Metalinse (30) emittierte Licht übertragen wird,
**dadurch gekennzeichnet, dass**
die Metalinse (30) den Divergenzwinkel des von der Lichtquelle (20) auf den Metabereich einfallenden Lichts verringert und das Licht emittiert, und in einem Fall, in dem die Lichtquelle (20) von einer Seite der Projektionslinse (50) aus über den Metabereich betrachtet wird, ein Bild (20') der Lichtquelle (20) an einer Position erscheint, die weiter von der Lichtquelle (20) entfernt ist, und zudem kleiner erscheint als das Bild (20'') derselben Lichtquelle (20), das entsteht, wenn anstelle der Metalinse (30) eine Konvexlinse (30") verwendet wird, sodass das Licht von der Lichtquelle (20) mit demselben Divergenzwinkel wie das von der Metalinse (30) emittierte Licht emittiert wird, und die Lichtquelle (20) von der Seite der Projektionslinse (50) aus über die Konvexlinse (30") betrachtet wird.

2. Scheinwerfer für Fahrzeuge nach Anspruch 1,
wobei, in dem Fall, in dem die Lichtquelle (20) von der Seite der Projektionslinse (50) aus über den Metabereich betrachtet wird, das Bild (20') der Lichtquelle (20) an der Position, die weiter entfernt ist als die Position der Lichtquelle (20), gleich groß wie die Lichtquelle (20) erscheint.

3. Scheinwerfer für Fahrzeuge nach Anspruch 1 oder 2,
wobei ein Ausmaß der Änderung in einer Struktur der Nanostruktur (35) von einer Mittelseite zu einer Außenumfangsseite des Metabereichs hin zunimmt.

4. Scheinwerfer für Fahrzeuge nach Anspruch 1 oder 2, umfassend:
ein Äußengehäuse (10), das die Lichtquelle (20), die Metalinse (30) und die Projektionslinse (50) umschließt; und
ein Innengehäuse (40), das die Lichtquelle (20) umschließt,
wobei die Metalinse (30) ein Teil des Innengehäuses (40) ist.

5. Scheinwerfer für Fahrzeuge nach Anspruch 4,
wobei die Nanostruktur (35) auf einer Innenraumseite (S2) des Innengehäuses (40) gebildet ist.

## Revendications

1. Phare de véhicule, comprenant :
une source de lumière (20) ;
une méta-lentille (30) comprenant une méta-région dans laquelle est disposée une pluralité de nanostructures (35) ayant chacune une largeur inférieure à une longueur d'onde la plus longue de la lumière émise par la source de lumière (20), et à travers laquelle la lumière émise par la source de lumière (20) est transmise ; et
une lentille de projection (50) à travers laquelle la lumière émise par la méta-lentille (30) est transmise,
**caractérisé en ce que**
la métalentille (30) réduit un angle de divergence de la lumière incidente sur la méta-région provenant de la source de lumière (20) et émet la lumière, et,
dans le cas où la source de lumière (20) est vue depuis un côté de la lentille de projection (50) via la méta-région, une image (20') de la source de lumière (20) apparaît à une position plus éloignée qu'une position de la source de lumière (20), et apparaît également plus petite que l'image (20") de la source de lumière (20) vue dans un cas où une lentille convexe (30") est agencée en lieu et place de la métalentille (30) de manière à émettre la lumière provenant de la source de lumière (20) à un même angle de divergence que la lumière émise par la méta-lentille (30), et la source de lumière (20) est vue du côté de la lentille de projection (50) via la lentille convexe (30").

2. Phare de véhicule selon la revendication 1,
dans lequel, dans le cas où la source de lumière (20) est vue depuis le côté de la lentille de projection (50) via la méta-région, l'image (20') de la source de lumière (20) apparaît, à la position plus éloignée que la position de la source de lumière (20), comme ayant une taille égale à celle de la source de lumière (20).

3. Phare de véhicule selon la revendication 1 ou la revendication 2,
dans lequel une ampleur de variation d'une structure de la nanostructure (35) augmente depuis un côté central vers un côté périphérique extérieur de la méta-région.

4. Phare de véhicule selon la revendication 1 ou la revendication 2, comprenant :
un boîtier externe (10) qui entoure la source de lumière (20), la méta-lentille (30) et la lentille de projection (50) ; et
un boîtier interne (40) qui entoure la source de lumière (20),
dans lequel la méta-lentille (30) est une partie du boîtier interne (40).

5. Phare de véhicule selon la revendication 4,
dans lequel la nanostructure (35) est formée sur le côté de l'espace intérieur (S2) du boîtier interne (40)
